# EUROPEAN PATENT APPLICATION

(11) **EP 4 274 334 A1**
(43) Date of publication of application: **08.11.2023**
(21) Application number: 21912429.4
(22) Date of filing: 04.01.2021
(51) Int. Cl.: H04W 72/04

(54) **METHOD AND APPARATUS FOR DETERMINING BEAM FAILURE DETECTION (BFD) RESOURCE, AND COMMUNICATION DEVICE**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/070186
(87) International publication number: WO 2022/141646

(57) **Abstract**

Provided are a method and apparatus for determining a beam failure detection (BFD) resource, and a communication device and a medium, which belong to the technical field of wireless communications. The method comprises: a terminal device determining configuration information sent by a network device, and determining, according to the configuration information, a target transmission reception point (TRP) and a target BFD resource corresponding to the target TRP, such that the terminal device can detect, on the basis of the target BFD resource, whether a beam failure occurs in the target TRP. Therefore, a terminal device can detect, on the basis of a BFD resource and in a timely manner, that a beam failure occurs in a target TRP, so as to perform beam failure recovery as soon as possible, such that the efficiency and reliability of the communication between the terminal device and a network device can be ensured.

## Description

### TECHNICAL FIELD

The disclosure relates to the field of wireless communication technologies, and in particular, to a method, an apparatus, and a communication device for determining a beam failure detection (BFD) resource.

### BACKGROUND

Since high-frequency channels attenuate rapidly in new radio (NR) technologies such as in the communication frequency band designated as frequency range 2, beam-based transmission and reception may be used to ensure adequate coverage of the signal. In general, the better the alignment between the beam and the communication device, the greater the signal gain provided by the beam. However, beam failures sometimes occur because of sudden fluctuations, failures, or interruptions of channels, occlusions by buildings, or other factors. After a beam failure occurs, the communication device needs to switch from the current failed beam to another available beam to perform a beam failure recovery.

At present, when a network device has a plurality of transmission reception points (TRPs), the network device may use the plurality of TRPs to provide services for a terminal device, including using the plurality of TRPs to transmit a physical downlink control channel (PDCCH) to the terminal device. However, at present, when the network device configures a reference signal resource for beam failure detection (BFD) for the terminal device, it is configured based on a serving cell. Even if the serving cell has the plurality of TRPs, one reference signal resource set is configured for BFD. If the network device does not have an explicit configuration, the terminal device may determine one reference signal resource set for BFD based on a reference signal resource corresponding to, a transmission configuration indication (TCI) state of a control resource set (CORESET), configured by the network device for the terminal device, which is also based on the serving cell. However, when the network device uses the plurality of TRPs to transmit the PDCCH to the terminal device and the network device does not configure the reference signal resource set for BFD for each TRP for the terminal, how does the terminal device determine the reference signal resource for BFD (hereinafter referred to as the BFD resource) for each TRP to perform BFD is a problem that needs to be solved.

### SUMMARY

A method for determining a beam failure detection (BFD) resource is provided according to embodiments of a first aspect of the disclosure. The method includes: determining configuration information transmitted from a network device; and determining a target transmission reception point (TRP) and a target BFD resource corresponding to the target TRP according to the configuration information, in which whether a beam failure occurs in the target TRP is detected based on the target BFD resource.

Optionally, the configuration information includes index information, the index information includes a control resource set (CORESET) pool index corresponding to a CORESET or a TRP identifier corresponding to the CORESET, and the CORESET corresponds to at least one transmission configuration indication (TCI) state.

Optionally, the configuration information includes one or a plurality of TCI states corresponding to the CORESET and the plurality of TCI states are in one-to-one correspondence with a plurality of TRPs.

Optionally, determining the target TRP and the target BFD resource corresponding to the target TRP according to the configuration information includes: selecting the target TRP from the plurality of TRPs according to the index information; and determining a BFD resource corresponding to the target TRP as the target BFD resource.

Optionally, selecting the target TRP from the plurality of TRPs according to the index information includes: selecting the target TRP from the plurality of TRPs according to a value of the index information.

Optionally, selecting the target TRP from the plurality of TRPs according to the index information includes: determining a correspondence between index information and TRPs; and selecting the target TRP from the plurality of TRPs according to the correspondence.

Optionally, the target TRP is a TRP corresponding to a CORESET pool index of 0, and the BFD resource of the target TRP includes a reference signal resource indicated by a TCI state corresponding to a first-type CORESET and/or a second-type CORESET; or the target TRP is a TRP corresponding to a CORESET pool index of 1, and the BFD resource of the target TRP includes a reference signal resource indicated by a TCI state corresponding to a third-type CORESET and/or a fourth-type CORESET.

Optionally, the first-type CORESET corresponds to a CORESET with a CORESET pool index of 0 and having one TCI state.

Optionally, the second-type CORESET corresponds to a CORESET with a CORESET pool index of 0 and having two TCI states; or the second-type CORESET corresponds to a CORESET with CORESET pool indices of 0 and 1 and having two TCI states; or the second-type CORESET corresponds to a CORESET with a CORESET pool index of a value other than 0 and 1 and having two TCI states.

Optionally, the third-type CORESET corresponds to a CORESET with a CORESET pool index of 1 and having one TCI state.

Optionally, the fourth-type CORESET corresponds to a CORESET with a CORESET pool index of 1 and having two TCI states; or the fourth-type CORESET corresponds to a CORESET with CORESET pool indices of 0 and 1 and having two TCI states; or the fourth-type CORESET corresponds to a CORESET with a CORESET pool index of a value other than 0 and 1 and having two TCI states.

Optionally, the BFD resource of the target TRP includes a reference signal resource corresponding to a specific TCI state in the two TCI states corresponding to the second-type CORESET, and the specific TCI state corresponds to a TRP with the CORESET pool index of 0.

Optionally, the BFD resource of the target TRP includes a reference signal resource corresponding to a specific TCI state in the two TCI states corresponding to the fourth-type CORESET, and the specific TCI state corresponds to a TRP with the CORESET pool index of 1.

Optionally, the configuration information includes a TRP identifier and a reference signal resource set corresponding to the TRP identifier; the TRP identifier in the configuration information is determined as the target TRP, and a reference signal resource in the reference signal resource set corresponding to the TRP identifier is determined as the target BFD resource.

Another method for determining a BFD resource is provided according to embodiments of a second aspect of the disclosure. The method includes: transmitting configuration information to a terminal device, in which the configuration information is used to determine a target TRP and a target BFD resource corresponding to the target TRP, and the target BFD resource is used to detect whether the target TRP has a beam failure.

An apparatus for determining a BFD resource is provided according to embodiments of a third aspect of the disclosure. The apparatus includes: a first determining module, configured to determine configuration information transmitted from a network device; and a second determining module, configured to determine, according to the configuration information, a target TRP and a target BFD resource corresponding to the target TRP, in which whether a beam failure occurs in the target TRP is detected based on the target BFD resource.

Optionally, the configuration information includes index information, the index information includes a CORESET pool index corresponding to a CORESET or a TRP identifier corresponding to the CORESET, and the CORESET corresponds to at least one TCI state.

Optionally, the configuration information includes one or a plurality of TCI states corresponding to the CORESET and the plurality of TCI states are in one-to-one correspondence with a plurality of TRPs.

Optionally, the second determining module includes: a selection unit, configured to select the target TRP from the plurality of TRPs according to the index information; a determining unit, configured to determine a BFD resource corresponding to the target TRP as the target BFD resource.

Optionally, the selection unit is specifically configured to select the target TRP from the plurality of TRPs according to a value of the index information.

Optionally, the selection unit is specifically configured to determine a correspondence between index information and TRPs; and select the target TRP from the plurality of TRPs according to the correspondence.

Optionally, the target TRP is a TRP corresponding to a CORESET pool index of 0, and the BFD resource of the target TRP includes a reference signal resource indicated by a TCI state corresponding to a first-type CORESET and/or a second-type CORESET; or the target TRP is a TRP corresponding to a CORESET pool index of 1, and the BFD resource of the target TRP includes a reference signal resource indicated by a TCI state corresponding to a third-type CORESET and/or a fourth-type CORESET.

Optionally, the first-type CORESET corresponds to a CORESET with a CORESET pool index of 0 and having one TCI state.

Optionally, the second-type CORESET corresponds to a CORESET with a CORESET pool index of 0 and having two TCI states; or the second-type CORESET corresponds to a CORESET with CORESET pool indices of 0 and 1 and having two TCI states; or the second-type CORESET corresponds to a CORESET with a CORESET pool index of a value other than 0 and 1 and having two TCI states.

Optionally, the third-type CORESET corresponds to a CORESET with a CORESET pool index of 1 and having one TCI state.

Optionally, the fourth-type CORESET corresponds to a CORESET with a CORESET pool index of 1 and having two TCI states; or the fourth-type CORESET corresponds to a CORESET with CORESET pool indices of 0 and 1 and having two TCI states; or the fourth-type CORESET corresponds to a CORESET with a CORESET pool index of a value other than 0 and 1 and having two TCI states.

Optionally, the BFD resource of the target TRP includes a reference signal resource corresponding to a specific TCI state in the two TCI states corresponding to the second-type CORESET, and the specific TCI state corresponds to a TRP with the CORESET pool index of 0.

Optionally, the BFD resource of the target TRP includes a reference signal resource corresponding to a specific TCI state in the two TCI states corresponding to the fourth-type CORESET, and the specific TCI state corresponds to a TRP with the CORESET pool index of 1.

Optionally, the configuration information includes a TRP identifier and a reference signal resource set corresponding to the TRP identifier; the apparatus further includes: a third determining module, configured to determine the TRP identifier in the configuration information as the target TRP, and a reference signal resource in the reference signal resource set corresponding to the TRP identifier as the target BFD resource.

Another apparatus for determining a BFD resource is provided according to embodiments of a fourth aspect of the disclosure. The apparatus includes:
a transmitting module, configured to transmit configuration information to a terminal device, in which the configuration information is used to determine a target TRP and a target BFD resource corresponding to the target TRP, and the target BFD resource is used to detect whether the target TRP has a beam failure.

A communication device is provided according to embodiments of a fifth aspect of the disclosure. The device includes: a transceiver; a memory; and a processor, respectively connected to the transceiver and the memory and configured to, by executing computer-executable instructions on the memory, control wireless signal transmission and reception of the transceiver and perform the method for determining a BFD resource provided by embodiments of the first aspect of the disclosure, or perform the method for determining a BFD resource provided by embodiments of the second aspect of the disclosure.

A computer storage medium is provided according to embodiments of a sixth aspect of the disclosure. The computer storage medium stores computer-executable instructions; when the computer-executable instructions are executed by a processor, the method for determining a BFD resource provided by embodiments of the first aspect of the disclosure is performed, or the method for determining a BFD resource provided by embodiments of the second aspect of the disclosure is performed.

A computer program product is provided according to embodiments of a seventh aspect of the disclosure. The computer program product includes a computer program. When the computer program is executed by a processor, the method for determining a BFD resource provided by embodiments of the first aspect of the disclosure is performed, or the method for determining a BFD resource provided by embodiments of the second aspect of the disclosure is performed.

With the method, the apparatus, and the communication device for determining a BFD resource according to the embodiments of the disclosure, the configuration information transmitted from the network device is determined by the terminal device, and the target TRP and the target BFD resource corresponding to the target TRP are determined according to the configuration information, so that the terminal device may detect whether the beam failure occurs in the target TRP based on the target BFD resource. Therefore, the terminal device may detect that the beam failure occurs in the target TRP timely based on the target BFD resource, so as to perform a beam failure recovery as soon as possible, thereby ensuring the communication efficiency and communication reliability between the terminal device and the network device.

Additional aspects and advantages of the disclosure will be set forth, in part, from the following description, and in part will be apparent from the following description, or may be learned by practice of the disclosure.

### BRIEF DESCRIPTION OF THE DRAWINGS

These and other aspects and advantages of the disclosure will become apparent and more readily from the following descriptions made on embodiments with reference to the drawings, in which:
FIG. 1 is a schematic flowchart of a method for determining a BFD resource according to some embodiments of the disclosure.
FIG. 2 is a schematic flowchart of another method for determining a BFD resource according to some embodiments of the disclosure.
FIG. 3 is a schematic flowchart of another method for determining a BFD resource according to some embodiments of the disclosure.
FIG. 4 is a schematic flowchart of another method for determining a BFD resource according to some embodiments of the disclosure.
FIG. 5 is a schematic block diagram of an apparatus for determining a BFD resource according to some embodiments of the disclosure.
FIG. 6 is a schematic block diagram of another apparatus for determining a BFD resource according to some embodiments of the disclosure.
FIG. 7 is a schematic block diagram of a terminal device according to some embodiments of the disclosure;
FIG. 8 is a schematic block diagram of a network device according to some embodiments of the disclosure.

### DETAILED DESCRIPTION

Reference will now be made in detail to embodiments, examples of which are illustrated in the accompanying drawings. The following description refers to the accompanying drawings in which the same numbers in different accompanying drawings represent the same or similar elements unless otherwise represented. The implementations set forth in the following description of the embodiments do not represent all implementations consistent with the disclosure. Instead, they are merely examples of apparatuses and methods consistent with aspects related to the disclosure as recited in the appended claims.

Terms used in embodiments of the disclosure are merely for describing specific examples and are not intended to limit the embodiments of the disclosure. The singular forms "one" and "the" used in the embodiments of the disclosure and the appended claims are also intended to include a multiple form, unless other meanings are clearly represented in the context. It should also be understood that the term "and/or" used in the disclosure refers to any or all of possible combinations including one or more associated listed items.

It should be understood that although terms "first", "second", "third", and the like are used in embodiments of the disclosure to describe various information, the information is not limited to the terms. These terms are merely used to differentiate information of a same type. For example, without departing from the scope of the embodiments of the disclosure, first information is also referred to as second information, and similarly the second information is also referred to as the first information. Depending on the context, for example, the term "if' used herein may be explained as "when" or "while", or "in response to ..., it is determined that".

Embodiments of the disclosure are described in detail below. Examples of the embodiments are illustrated in the accompanying drawings where the same or similar numbers throughout indicate the same or similar elements. The embodiments described below by reference to the accompanying drawings are illustrative and are intended to interpret the disclosure and are not to be construed as a limitation of the disclosure.

Since high-frequency channels attenuate rapidly in new radio (NR) technologies such as in the communication frequency band designated as frequency range 2, beam-based transmission and reception may be used to ensure the coverage of the signal. When a network device has a plurality of transmission reception points (TRPs), the network device may use the plurality of TRPs to provide services for a terminal device, including using the plurality of TRPs to transmit a physical downlink control channel (PDCCH) to the terminal device. In some embodiments of the disclosure, the TRPs refer to an antenna array that supports a plurality of transmission or reception functions, for example, which may have a plurality of antennas with different orientations. In the conventional manner, when the network device uses one TRP to transmit the PDCCH to the terminal device, it needs to configure the transmission configuration indication (TCI) state for the terminal device to receive the PDCCH. The configuration manner may be as follows: the network device configures one control resource set (CORESET) such as CORESET#1 for the terminal device and configure a TCI state corresponding to CORESET#1 such as TCI#1, and the network device may also configure one search space set (SS set) for the terminal device and the SS set is associated with CORESET#1, so that the terminal device may use TCI#1 when receiving the PDCCH on the resource in the SS set. Currently, each SS set may only be associated with one CORESET and each CORESET is configured with only one TCI state.

The TCI indicates one reference signal resource identifier. The reference signal resource identifier may be a synchronization signal block (SSB) identifier, a channel state information reference signal (CSI-RS) identifier, or a sounding reference signal (SRS) identifier. The TCI is used to instruct the terminal device to use the same reception beam as receiving the certain SSB or CSI-RS from the network device when receiving the PDCCH/physical downlink shared channel (PDSCH). The certain SSB or CSI-RS is an SSB or CSI-RS corresponding to the reference signal resource identifier carried in the TCI. Or the TCI is used to instruct the terminal device to use the same transmission beam as transmitting a certain reference signal (such as SRS) or use the transmission beam corresponding to the same reception beam as receiving a certain reference signal (such as SSB or CSI-RS), when transmitting the physical uplink control channel (PUCCH)/physical uplink control channel (PUSCH).

In some embodiments of the disclosure, PDCCHs transmitted by the plurality of TRPs may carry the same downlink control information (DCI) by the following manner, which is hereinafter referred to as transmitting the same PDCCH.

Manner 1, the network device configures two TCI states for one CORESET and configures one SS set to associate with the CORESET, then the CORESET may correspond to two TCI states; or configure two SS sets to associate with the CORESET, in which each SS set corresponds to one TCI state.

Manner 2, the network device configures one SS set, the SS set is associated with two CORESETs, each CORESET corresponds to one TCI state, and the SS set may correspond to two TCI states.

Manner 3, the network device configures two CORESETs, each CORESET is configured with one TCI state, and two SS sets are configured to associate with two CORESETs respectively, that is, the network device configures two SS sets, which are associated with different CORESETs respectively and correspond to different TCI states respectively.

In some embodiments of the disclosure, for a reference signal resource set q0 for beam failure detection (BFD), when the network device does not explicitly configure q0, the terminal device determines q0 according to the TCI state corresponding to the CORESET. That is, q0 includes the reference signal used to indicate the beam in the TCI state corresponding to the CORESET, and the reference signal is a periodic CSI-RS. When the network device uses the plurality of TRPs to transmit the PDCCH to the terminal device, the BFD resource for each TRP needs to be configured. If the network device explicitly configures, it is easier to implement. However, if the network device does not explicitly configure and there is the CORESET configured with two TCI states, how the terminal device determines q0 of each TRP is a problem to be solved.

In view of the above problems, the disclosure provides a method, an apparatus, and a communication device for determining a BFD resource.

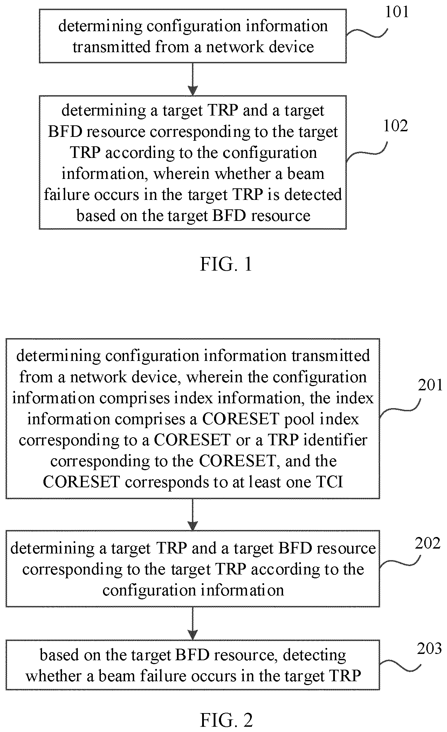

FIG. 1 is a schematic flowchart of a method for determining a BFD resource according to some embodiments of the disclosure. The method for determining a BFD resource may be applicable to the terminal device.

The terminal device may be a device that provides voice and/or data connectivity to a user, a hand-held device with a wireless connection function, or other processing device connected to a wireless modem. In different systems, the name of the terminal device may be different. For example, in the fifth generation (5G) system, the terminal device may be called a user equipment (UE). The wireless terminal device may communicate with one or more core networks (CNs) via a radio access network (RAN). The wireless terminal device may be a mobile terminal device, such as a mobile phone (or called a cellular phone) and a computer with the mobile terminal device, e.g. the portable, pocket-sized, hand-held, computer-built or vehicle-mounted mobile device, which exchange language and/or data with the radio access network.

For example, the terminal device may be a personal communication service (PCS) phone, a cordless phone, a session initiated protocol (SIP) phone, a wireless local loop (WLL) station, a personal digital assistant (PDA) or other device. The wireless terminal device may also be referred to as a system, a subscriber unit, a subscriber station, a mobile station, a mobile, a remote station, an access point, a remote terminal, an access terminal, a user terminal, a user agent, or a user device, which are not limited in some embodiments of the disclosure.

As illustrated in FIG. 1, the method for determining a BFD resource may include the following steps.

Step 101: configuration information transmitted from a network device is determined.

In some embodiments of the disclosure, the network device takes a base station as an example. The base station may include a plurality of cells for serving terminal devices. Depending on the specific application, each cell may include a plurality of TRPs, or may be a device in the access network that communicates with wireless terminal devices through one or more sectors on the air interface, or other name. For example, the base station involved in some embodiments of the disclosure may be a base transceiver station (BTS) in a global system for mobile communication (GSM) or in code division multiple access (CDMA), a base station (NodeB) in wide-band code division multiple access (WCDMA), an evolutional Node B (eNB or e-NodeB) in a long term evolution (LTE) system, a 5G base station (gNB) in 5G network architecture (next generation system), a home evolved Node B (HeNB), a relay node, a home base station (femto), a pico base station (pico), or the like, which are not limited in some embodiments of the disclosure.

In some embodiments of the disclosure, the network device may transmit a downlink transmission to the terminal device. The downlink transmission may include the configuration information of the network device. Correspondingly, after receiving the downlink transmission from the network device, the terminal device may determine the configuration information of the network device according to the downlink transmission. The downlink transmission may be a signaling transmission, a data transmission, or a signaling/data mixed transmission.

As an example, the network device may transmit an indication signaling to the terminal device, so that the terminal device may determine the configuration information according to the indication signaling.

Step 102: a target TRP and a target BFD resource corresponding to the target TRP are determined according to the configuration information. Whether a beam failure occurs in the target TRP is detected based on the target BFD resource.

In some embodiments of the disclosure, the target TRP is a TRP to be detected of the terminal device.

In some embodiments of the disclosure, the target BFD resource is a target reference signal resource used for beam detection in the BFD reference signal resource set. The target BFD resource is used to detect whether the target TRP corresponding to the target BFD resource has a beam failure.

In some embodiments of the disclosure, the terminal device may determine the target TRP and the target BFD resource corresponding to the target TRP according to the configuration information, so that the terminal device may detect whether the beam failure occurs in the target TRP based on the target BFD resource. Therefore, when the beam failure occurs, the terminal device may timely detect that the beam failure occurs in the target TRP based on the target BFD resource, so as to perform a beam failure recovery as soon as possible, thereby ensuring the communication efficiency and communication reliability between the terminal device and the network device.

In the method for determining a BFD resource according to some embodiments of the disclosure, the configuration information of the network device is determined by the terminal device, and the target TRP and the target BFD resource corresponding to the target TRP are determined according to the configuration information, so that the terminal device may detect whether the beam failure occurs in the target TRP based on the target BFD resource. Therefore, when the beam failure occurs, the terminal device may timely detect that the beam failure occurs in the target TRP based on the target BFD resource, so as to perform a beam failure recovery as soon as possible, so as to ensure the communication efficiency and communication reliability between the terminal device and the network device.

Some embodiments of the disclosure provide another method for determining a BFD resource. FIG. 2 is a schematic flowchart of another method for determining a BFD resource according to some embodiments of the disclosure. The method for determining a BFD resource may be applicable to the terminal device.

As illustrated in FIG. 2, the method for determining a BFD resource may include the following steps.

Step 201: configuration information transmitted from a network device is determined. The configuration information includes index information. The index information includes a CORESET pool index corresponding to a CORESET or a TRP identifier corresponding to the CORESET. The CORESET corresponds to at least one TCI state.

In some embodiments of the disclosure, the configuration information may include the index information. The index information may include the CORESET pool index (PoolIndex) corresponding to the CORESET or the TRP identifier corresponding to the CORESET.

The CORESET pool Index (PoolIndex) may be 0. Or the CORESETPoolIndex may also be 1. Or the CORESETPoolIndex may also be 0 and 1. Or the CORESETPoolIndex may also be a value other than 0 and 1 (such as 2, 3, 4, etc.), which is not limited by some embodiments of the disclosure.

The TRP identifier may be a TRP ID. Or the TRP identifier may be a CORESET pool index (PoolIndex) corresponding to the TRP. Or the TRP identifier may be a reference signal resource ID corresponding to the TRP. Or the TRP identifier may be a reference signal resource set ID. Or the TRP identifier may be an antenna panel (panel) ID corresponding to the TRP, which is not limited in some embodiments of the disclosure.

In some embodiments of the disclosure, the CORESET may correspond to one TCI state. Or the CORESET may correspond to a plurality of TCI states. A typical situation is that the CORESET corresponds to two TCI states, which is not limited in some embodiments of the disclosure. One TCI state corresponds to one beam.

Optionally, one or a plurality of TCI states corresponding to the CORESET may be included in the configuration information.

Optionally, each TCI state may correspond to one TRP. When the CORESET corresponds to the plurality of TCI states, the plurality of TCI states are in one-to-one correspondence with the plurality of TRPs. The plurality of TRPs may be a plurality of TRPs of one serving cell of the terminal device. Or the plurality of TRPs may also be a plurality of TRPs of different serving cells of the terminal device. Or some TRPs of the plurality of TRPs are TRPs of the serving cell of the terminal device and another part of the TRPs in the plurality of TRPs are TRPs of the neighboring cells of the terminal device.

In some embodiments of the disclosure, the network device may transmit a downlink transmission to the terminal device. The downlink transmission may include the configuration information of the network device. Correspondingly, after receiving the downlink transmission from the network device, the terminal device may determine the configuration information of the network device according to the downlink transmission. The downlink transmission may be a signaling transmission, a data transmission, or a signaling/data mixed transmission.

As an example, the network device may transmit an indication signaling to the terminal device, so that the terminal device may determine the configuration information according to the indication signaling.

Step 202: a target TRP and a target BFD resource corresponding to the target TRP are determined according to the configuration information.

In some embodiments of the disclosure, the target TRP is a TRP to be detected of the terminal device.

In some embodiments of the disclosure, the target BFD resource is a target reference signal resource used for beam detection in the BFD reference signal resource set. The target BFD resource is used to detect whether the target TRP corresponding to the target BFD resource has a beam failure.

In some embodiments of the disclosure, the terminal device may determine the target TRP and the target BFD resource corresponding to the target TRP according to the configuration information, so that the terminal device may detect whether the beam failure occurs in the target TRP based on the target BFD resource.

In a possible implementation manner of embodiments of the disclosure, when the CORESET corresponds to one TCI state, the target TRP may be a TRP corresponding to the CORESET pool index or TRP identifier in the configuration information and the target BFD resource may be a reference signal resource indicated by the TCI state corresponding to the CORESET.

In another possible implementation manner of embodiments of the disclosure, when the CORESET corresponds to the plurality of TCI states, typically the CORESET corresponds to two TCI states, the target TRP may be selected from the plurality of TRPs according to the index information, and a BFD resource corresponding to the target TRP is taken as the target BFD resource.

As a possible implementation manner, the terminal device may select the target TRP from the plurality of TRPs corresponding to the plurality of TCI states according to the value of the index information.

For example, the index information includes the CORESET pool index (PoolIndex) corresponding to the CORESET and the CORESET corresponds to two TCI states. Two TCI states correspond to two TRPs respectively, that is, two TCI states correspond to a first TRP and a second TRP respectively. When the CORESETPoolIndex is 0, the target TRP may be the first TRP; when the CORESETPoolIndex is 1, the target TRP may be the second TRP; and when the CORESET PoolIndex is 0 and 1 or the CORESETPoolIndex is a value other than 0 and 1, such as 2, 3, 4, etc., the target TRP may be the first TRP and/or the second TRP.

As another possible implementation manner, the terminal device may also determine a correspondence between index information and TRPs, and select the target TRP from the plurality of TRPs according to the correspondence.

Optionally, the correspondence between different index information and TRPs may be preset, so that the above-mentioned correspondence may be queried according to the index information included in the configuration information to determine the TRP that matches the index information. It is further determined whether there is the above-mentioned TRP matching the index information in the plurality of TRPs, and when there is the above-mentioned TRP matching the index information, the TRP matching the index information in the plurality of TRPs may be used as the target TRP.

For example, the preset correspondence is: index information 0 corresponds to TRP0, index information 1 corresponds to TRP1, index information 2 corresponds to TRP2 or index information 2 corresponds to TRP0 and TRP1. If the index information in the configuration information is index information 1, by querying the above correspondence, it may be determined that the TRP matching the index information is TRP1. If TRP1 exists in the plurality of TRPs, TRP1 in the plurality of TRPs may be used as the target TRP.

In some embodiments of the disclosure, after the target TRP is determined, the BFD resource corresponding to the target TRP may be used as the target BFD resource.

As a possible implementation manner, when the target TRP is a TRP corresponding to a CORESET pool index of 0, the BFD resource of the target TRP may include a reference signal resource indicated by a TCI state corresponding to a first-type CORESET and/or a second-type CORESET.

Optionally, the first-type CORESET may correspond to a CORESET with a CORESET pool index of 0 and having one TCI state.

Optionally, the second-type CORESET may correspond to a CORESET with a CORESET pool index of 0 and having two TCI states. Typically, the second-type CORESET corresponds to a CORESET having at most two TCI states. Alternatively, the second-type CORESET may correspond to a CORESET with CORESET pool indices of 0 and 1 and having two TCI states. Typically, the second-type CORESET corresponds to a CORESET having at most two TCI states. Alternatively, the second-type CORESET may correspond to a CORESET with a CORESET pool index of a value other than 0 and 1 (such as 2, 3, 4, etc.) and having two TCI states. Typically, the second-type CORESET corresponds to a CORESET having at most two TCI states.

It should be understood that since the first-type CORESET corresponds to one TCI state, the reference signal resource indicated by the one TCI state corresponding to the first-type CORESET may be directly used as the BFD resource of the target TRP. The second-type CORESET may correspond to two TCI states. In this case, the BFD resource of the target TRP may include a reference signal resource corresponding to a specific TCI state in the two TCI states corresponding to the second-type CORESET. The specific TCI state corresponds to the TRP with the CORESET pool index of 0.

For example, when the second-type CORESET corresponds to the CORESET with the CORESETPoolIndex of 0 and having two TCI states, the target TRP may be the first TRP corresponding to the CORESETPoolIndex of 0, and the BFD resource of the target TRP may include the reference signal resource corresponding to the specific TCI state in the two TCI states corresponding to the second-type CORESET. For example, the two TCI states corresponding to the second-type CORESET are TCI#0 and TCI#1, in which TCI#0 corresponds to the first TRP and TCI#1 corresponds to the second TRP, and the BFD resource of the target TRP includes the reference signal resource corresponding to the specific TCI state in the two TCI states corresponding to the second-type CORESET. The specific TCI state is the TCI state corresponding to the TRP with the CORESETPoolIndex of 0, that is, the TCI state corresponding to the first TRP, so the target BFD resource includes the reference signal resource indicated by TCI#0. The reference signal resource indicated by TCI#0 may be SSB, CSI-RS or SRS.

For example, when the second-type CORESET corresponds to the CORESET with the CORESETPoolIndex of 0 and 1 and having two TCI states, the target TRP may be the first TRP corresponding to the CORESETPoolIndex of 0, which is referred to as the target first TRP herein. The BFD resource of the target first TRP may include the reference signal resource corresponding to the specific TCI state in the two TCI states corresponding to the second-type CORESET. For example, the two TCI states corresponding to the second-type CORESET are TCI#0 and TCI#1, in which TCI#0 corresponds to the first TRP and TCI#1 corresponds to the second TRP, and the BFD resource of the target first TRP includes the reference signal resource corresponding to the specific TCI state in the two TCI states corresponding to the second-type CORESET. The specific TCI state is the TCI state corresponding to the TRP with the CORESETPoolIndex of 0, that is, the TCI state corresponding to the first TRP, so the target BFD resource corresponding to the target first TRP includes the reference signal resource indicated by TCI#0. The reference signal resource indicated by TCI#0 may be SSB, CSI-RS or SRS. The target TRP may be the second TRP corresponding to the CORESETPoolIndex of 1, which is referred to as the target second TRP herein. The BFD resource of the target second TRP may include the reference signal resource corresponding to the specific TCI state in the two TCI states corresponding to the second-type CORESET. For example, the two TCI states corresponding to the second-type CORESET are TCI#0 and TCI#1, in which TCI#0 corresponds to the first TRP and TCI#1 corresponds to the second TRP, and the BFD resource of the target second TRP includes the reference signal resource corresponding to the specific TCI state in the two TCI states corresponding to the second-type CORESET. The specific TCI state is the TCI state corresponding to the TRP with the CORESETPoolIndex of 1, that is, the TCI state corresponding to the second TRP, so the target BFD resource corresponding to the target second TRP includes the reference signal resource indicated by TCI#1. The reference signal resource indicated by TCI#1 may be SSB, CSI-RS or SRS.

For example, when the second-type CORESET corresponds to the CORESET with the CORESET pool index of the value other than 0 and 1 (such as 2, 3, 4, etc.) and having two TCI states, the target TRP may be the first TRP corresponding to the CORESETPoolIndex of 0, which is referred to as the target first TRP herein. The BFD resource of the target first TRP may include the reference signal resource corresponding to the specific TCI state in the two TCI states corresponding to the second-type CORESET. For example, the two TCI states corresponding to the second-type CORESET are TCI#0 and TCI#1, in which TCI#0 corresponds to the first TRP and TCI#1 corresponds to the second TRP, and the BFD resource of the target first TRP includes the reference signal resource corresponding to the specific TCI state in the two TCI states corresponding to the second-type CORESET. The specific TCI state is the TCI state corresponding to the TRP with the CORESETPoolIndex of 0, that is, the TCI state corresponding to the first TRP, so the target BFD resource corresponding to the target first TRP includes the reference signal resource indicated by TCI#0. The reference signal resource indicated by TCI#0 may be SSB, CSI-RS or SRS. The target TRP may be the second TRP corresponding to the CORESETPoolIndex of 1, which is referred to as the target second TRP herein. The BFD resource of the target second TRP may include the reference signal resource corresponding to the specific TCI state in the two TCI states corresponding to the second-type CORESET. For example, the two TCI states corresponding to the second-type CORESET are TCI#0 and TCI#1, in which TCI#0 corresponds to the first TRP and TCI#1 corresponds to the second TRP, and the BFD resource of the target second TRP includes the reference signal resource corresponding to the specific TCI state in the two TCI states corresponding to the second-type CORESET. The specific TCI state is the TCI state corresponding to the TRP with the CORESETPoolIndex of 1, that is, the TCI state corresponding to the second TRP, so the target BFD resource corresponding to the target second TRP includes the reference signal resources indicated by TCI#1. The reference signal resource indicated by TCI#1 may be SSB, CSI-RS or SRS.

As another possible implementation manner, when the target TRP is a TRP corresponding to a CORESET pool index of 1, the BFD resource of the target TRP may include a reference signal resource indicated by a TCI state corresponding to a third-type CORESET and/or a fourth-type CORESET.

Optionally, the third-type CORESET may correspond to a CORESET with a CORESET pool index of 1 and having one TCI state.

Optionally, the fourth-type CORESET may correspond to a CORESET with a CORESET pool index of 1 and having two TCI states. Typically, the fourth-type CORESET corresponds to a CORESET having at most two TCI states. Alternatively, the fourth-type CORESET may correspond to a CORESETs with CORESET pool indices of 0 and 1 and having two TCI states. Typically, the fourth-type CORESET corresponds to a CORESET having at most two TCI states. Alternatively, the fourth-type CORESET corresponds to a CORESET with a CORESET pool index of a value other than 0 and 1 (such as 2, 3, 4, etc.) and having two TCI states. Typically, the fourth-type CORESET corresponds to a CORESET having at most two TCI states.

It should be understood that since the third-type CORESET corresponds to one TCI state, the reference signal resource indicated by the one TCI state corresponding to the third-type CORESET may be directly used as the BFD resource of the target TRP. The fourth-type CORESET may correspond to two TCI states. In this case, the BFD resource of the target TRP may include a reference signal resource corresponding to a specific TCI state in the two TCI states corresponding to the fourth-type CORESET. The specific TCI state corresponds to the TRP with the CORESET pool index of 1.

For example, when the fourth-type CORESET corresponds to the CORESET with the CORESETPoolIndex of 1 and having two TCI states, the target TRP may be the second TRP corresponding to the CORESETPoolIndex of 1, and the BFD resource of the target TRP may include the reference signal resource corresponding to the specific TCI state in the two TCI states corresponding to the fourth-type CORESET. For example, the two TCI states corresponding to the fourth-type CORESET are TCI#0 and TCI#1, in which TCI#0 corresponds to the first TRP and TCI#1 corresponds to the second TRP, and the BFD resource of the target TRP includes the reference signal resource corresponding to the specific TCI state in the two TCI states corresponding to the fourth-type CORESET. The specific TCI state is the TCI state corresponding to the TRP with the CORESETPoolIndex of 1, that is, the TCI state corresponding to the second TRP, so the target BFD resource includes the reference signal resource indicated by TCI#1. The reference signal resource indicated by TCI#1 may be SSB, CSI-RS or SRS.

For example, when the fourth-type CORESET corresponds to the CORESET with the CORESETPoolIndex of 0 and 1 and having two TCI states, the target TRP may be the first TRP corresponding to the CORESETPoolIndex of 0, which is referred to as the target first TRP herein. The BFD resource of the target first TRP may include the reference signal resource corresponding to the specific TCI state in the two TCI states corresponding to the fourth-type CORESET. For example, the two TCI states corresponding to the fourth-type CORESET are TCI#0 and TCI#1, in which TCI#0 corresponds to the first TRP and TCI#1 corresponds to the second TRP, and the BFD resource of the target first TRP includes the reference signal resource corresponding to the specific TCI state in the two TCI states corresponding to the fourth-type CORESET. The specific TCI state is the TCI state corresponding to the TRP with the CORESETPoolIndex of 0, that is, the TCI state corresponding to the first TRP, so the target BFD resource corresponding to the target first TRP includes the reference signal resource indicated by TCI#0. The reference signal resource indicated by TCI#0 may be SSB, CSI-RS or SRS. The target TRP may be the second TRP corresponding to the CORESETPoolIndex of 1, which is referred to as the target second TRP herein. The BFD resource of the target second TRP may include the reference signal resource corresponding to the specific TCI state in the two TCI states corresponding to the fourth-type CORESET. For example, the two TCI states corresponding to the fourth-type CORESET are TCI#0 and TCI#1, in which TCI#0 corresponds to the first TRP and TCI#1 corresponds to the second TRP, and the BFD resource of the target second TRP includes the reference signal resource corresponding to the specific TCI state in the two TCI states corresponding to the fourth-type CORESET. The specific TCI state is the TCI state corresponding to the TRP with the CORESETPoolIndex of 1, that is, the TCI state corresponding to the second TRP, so the target BFD resource corresponding to the target second TRP includes the reference signal resource indicated by TCI#1. The reference signal resource indicated by TCI#1 may be SSB, CSI-RS or SRS.

For example, when the fourth-type CORESET corresponds to the CORESET with the CORESETPoolIndex of a value other than 0 and 1 (such as 2, 3, 4, etc.) and having two TCI states, the target TRP may be the first TRP corresponding to the CORESETPoolIndex of 0, which is referred to as the target first TRP herein. The BFD resource of the target first TRP may include the reference signal resource corresponding to the specific TCI state in the two TCI states corresponding to the fourth-type CORESET. For example, the two TCI states corresponding to the fourth-type CORESET are TCI#0 and TCI#1, in which TCI#0 corresponds to the first TRP and TCI#1 corresponds to the second TRP, and the BFD resource of the target first TRP includes the reference signal resource corresponding to the specific TCI state in the two TCI states corresponding to the fourth-type CORESET. The specific TCI state is the TCI state corresponding to the TRP with the CORESETPoolIndex of 0, that is, the TCI state corresponding to the first TRP, so the target BFD resource corresponding to the target first TRP includes the reference signal resource indicated by TCI#0. The reference signal resource indicated by TCI#0 may be SSB, CSI-RS or SRS. The target TRP may be the second TRP corresponding to the CORESETPoolIndex of 1, which is referred to as the target second TRP herein. The BFD resource of the target second TRP may include the reference signal resource corresponding to the specific TCI state in the two TCI states corresponding to the fourth-type CORESET. For example, the two TCI states corresponding to the fourth-type CORESET are TCI#0 and TCI#1, in which TCI#0 corresponds to the first TRP and TCI#1 corresponds to the second TRP, and the BFD resource of the target second TRP includes the reference signal resource corresponding to the specific TCI state in the two TCI states corresponding to the fourth-type CORESET. The specific TCI state is the TCI state corresponding to the TRP with the CORESETPoolIndex of 1, that is, the TCI state corresponding to the second TRP, so the target BFD resource corresponding to the target second TRP includes the reference signal resource indicated by TCI#1. The reference signal resource indicated by TCI#1 may be SSB, CSI-RS or SRS.

Therefore, when the network device does not provide the explicit configuration of the BFD resource corresponding to each TRP and there are the plurality of TCI states corresponding to the CORESET, the terminal device may also determine the BFD resource of each TRP by itself, which may improve the performance applicability of the method.

Step 203, based on the target BFD resource, whether a beam failure occurs in the target TRP is detected.

In some embodiments of the disclosure, after the terminal device determines the target TRP and the target BFD resource corresponding to the target TRP, it may detect whether the beam failure occurs in the target TRP based on the target BFD resource. Therefore, in the case where the network device does not provide the explicit configuration of the BFD resource corresponding to each TRP, the terminal device may also determine the BFD resource of each TRP by itself, so that that the BFD may be performed and the communication efficiency and communication reliability between the terminal device and the network device may be ensured.

In the method for determining a BFD resource according to some embodiments of the disclosure, the terminal device determines the configuration information transmitted from the network device and determines the target TRP and the target BFD resource corresponding to the target TRP according to the configuration information, so that the terminal device may detect whether the beam failure occurs in the target TRP based on the target BFD resource. Therefore, when the beam failure occurs, the terminal device may timely detect that the beam failure occurs in the target TRP timely based on the target BFD resource, so as to perform a beam failure recovery as soon as possible, thereby ensuring the communication efficiency and communication reliability between the terminal device and the network device.

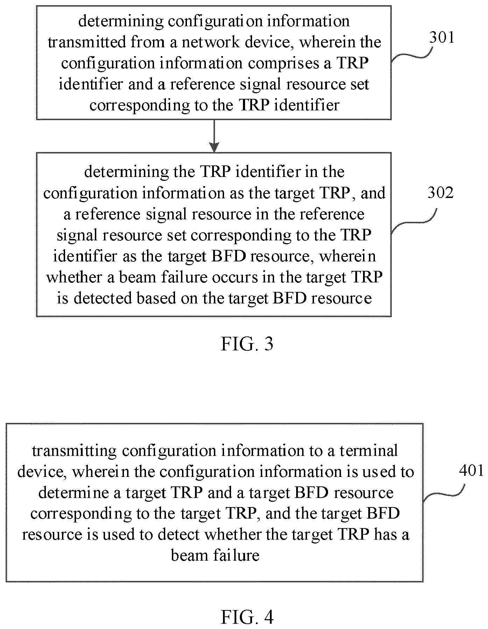

Embodiments of the disclosure provide another method for determining a BFD resource. FIG. 3 is a schematic flowchart of another method for determining a BFD resource according to some embodiments of the disclosure. The method can be applicable to the terminal device.

As illustrated in FIG. 3, the method for determining a BFD resource may include the following steps.

Step 301: configuration information transmitted from a network device is determined. The configuration information includes a TRP identifier and a reference signal resource set corresponding to the TRP identifier.

In some embodiments of the disclosure, the TRP identifier may be a TRP ID. Or the TRP identifier may be a CORESET pool index corresponding to the TRP. Or the TRP identifier may be a reference signal resource ID corresponding to the TRP. Or the TRP identifier may be a reference signal resource set ID. Or the TRP identifier may be an antenna panel (panel) ID corresponding to the TRP, which is not limited in some embodiments of the disclosure.

In some embodiments of the disclosure, the network device may transmit a downlink transmission to the terminal device. The downlink transmission may include the configuration information of the network device. Correspondingly, after receiving the downlink transmission from the network device, the terminal device may determine the configuration information of the network device according to the downlink transmission. The downlink transmission may be a signaling transmission, a data transmission, and a signaling/data mixed transmission.

As an example, the network device may transmit an indication signaling to the terminal device, so that the terminal device may determine the configuration information according to the indication signaling.

Step 302: the TRP identifier in the configuration information is determined as the target TRP, and a reference signal resource in the reference signal resource set corresponding to the TRP identifier is used as the target BFD resource. Whether a beam failure occurs in the target TRP is detected based on the target BFD resource.

In some embodiments of the disclosure, the configuration information of the network device may directly include the TRP identifier and the reference signal resource set corresponding to the TRP identifier, so that after receiving the configuration information, the terminal device may directly determine the target TRP according to the TRP identifier and use the reference signal resource in the reference signal resource set corresponding to the TRP identifier as the target BFD resource. The terminal device may detect whether the beam failure occurs in the target TRP based on the target BFD resource. Therefore, the network device directly instructs the TRP and the BFD resource corresponding to the TRP, without the need for the terminal device to determine by itself, which may reduce the workload of the terminal device. In addition, the BFD is directly performed based on the BFD resource indicated by the network device, which may improve the accuracy of the detection result.

As an example, the network device may transmit an indication signaling to the terminal device, in which the indication signaling is used to indicate the reference signal resource included in the BFD reference signal resource set of each TRP, so that after receiving the indication signaling, the terminal device may detect whether the beam failure occurs in the corresponding TRP according to the reference signal resource included in the BFD reference signal resource set of each TRP.

In the method for determining a BFD resource according to some embodiments of the disclosure, by determining the configuration information of the network device, where the configuration information includes the TRP identifier and the reference signal resource set corresponding to the TRP identifier, the TRP identifier in the configuration information is determined as the target TRP, and the reference signal resource in the reference signal resource set corresponding to the TRP identifier is used as the target BFD resource; Based on the target BFD resource, it is detected whether the beam failure occurs in the target TRP. Therefore, the network device directly instructs the TRP and the BFD resource corresponding to the TRP without the need for the terminal device to determine by itself, which may reduce the workload of the terminal device.

Some embodiments of the disclosure provide another method for determining a BFD resource. FIG. 4 is a schematic flowchart of another method for determining a BFD resource according to some embodiments of the disclosure. The method may be applicable to the network device.

As illustrated in FIG. 4, the method for determining a BFD resource may include the following step.

Step 401: configuration information is transmitted to a terminal device. The configuration information is used to determine a target TRP and a target BFD resource corresponding to the target TRP, and the target BFD resource is used to detect whether the target TRP has a beam failure.

In some embodiments of the disclosure, the network device may transmit the configuration information to the terminal device. Correspondingly, after receiving the configuration information, the terminal device may determine the target TRP and the target BFD resource corresponding to the target TRP according to the configuration information, so that the terminal device may detect whether the beam failure occurs in the target TRP based on the target BFD resource.

It should be noted that the process of determining the target TRP and the target BFD resource corresponding to the target TRP by the terminal device according to the configuration information may be implemented in any implementation in the foregoing embodiments in FIG. 1 to FIG. 3 of the disclosure, which is not limited in some embodiments of the disclosure and will not be repeated herein.

In the method for determining a BFD resource according to some embodiments of the disclosure, the configuration information is transmitted to the terminal device by the network device, in which the configuration information is used to determine the target TRP and the target BFD resource corresponding to the target TRP, and the target BFD resource is used for detect whether the target TRP has the beam failure. Therefore, when the beam failure occurs, the terminal device may timely detect that the target TRP has the beam failure based on the target BFD resource, so as to perform a beam failure recovery as soon as possible, thereby ensuring the communication efficiency and communication reliability between the terminal device and the network device.

Corresponding to the methods for determining a BFD resource provided in the above-mentioned embodiments of FIG. 1 to FIG. 3, the disclosure also provides an apparatus for determining a BFD resource. Since the apparatus for determining a BFD resource provided in some embodiments of the disclosure corresponds to the method for determining a BFD resource provided in some embodiments of FIG. 1 to FIG. 3, the implementation of the method for determining a BFD resource is also applicable to the apparatus for determining a BFD resource provided in some embodiments of the disclosure. The apparatus for determining a BFD resource will not be described in detail in some embodiments of the disclosure.

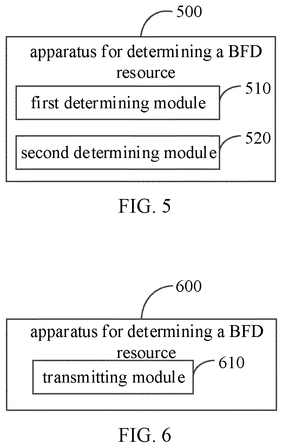

FIG. 5 is a schematic block diagram of an apparatus for determining a BFD resource according to some embodiments of the disclosure. The apparatus may be applicable to the terminal device.

As illustrated in FIG. 5, the apparatus 500 for determining a BFD resource may include a first determining module 510 and a second determining module 520.

The first determining module 510 is configured to determine configuration information transmitted from the network device.

The second determining module 520 is configured to determine, according to the configuration information, a target TRP and a target BFD resource corresponding to the target TRP. Whether a beam failure occurs in the target TRP is detected based on the target BFD resource.

Optionally, the configuration information includes index information, the index information includes a CORESET pool index corresponding to a CORESET or a TRP identifier corresponding to the CORESET, and the CORESET corresponds to at least one TCI state.

Optionally, the configuration information includes one or a plurality of TCI states corresponding to the CORESET and the plurality of TCI states are in one-to-one correspondence with a plurality of TRPs.

Optionally, the second determining module 520 may include a selection unit and a determining unit.

The selection unit is configured to select the target TRP from the plurality of TRPs according to the index information.

The determining unit is configured to determine a BFD resource corresponding to the target TRP as the target BFD resource.

Optionally, the selection unit is specifically configured to select the target TRP from the plurality of TRPs according to a value of the index information.

Optionally, the selection unit is specifically configured to determine a correspondence between index information and TRPs; and select the target TRP from the plurality of TRPs according to the correspondence.

Optionally, the target TRP is a TRP corresponding to a CORESET pool index of 0, and the BFD resource of the target TRP includes a reference signal resource indicated by a TCI state corresponding to a first-type CORESET and/or a second-type CORESET; or the target TRP is a TRP corresponding to a CORESET pool index of 1, and the BFD resource of the target TRP includes a reference signal resource indicated by a TCI state corresponding to a third-type CORESET and/or a fourth-type CORESET.

Optionally, the first-type CORESET corresponds to a CORESET with a CORESET pool index of 0 and having one TCI state.

Optionally, the second-type CORESET corresponds to a CORESET with a CORESET pool index of 0 and having two TCI states; or the second-type CORESET corresponds to a CORESET with CORESET pool indices of 0 and 1 and having two TCI states; or the second-type CORESET corresponds to a CORESET with a CORESET pool index of a value other than 0 and 1 and having two TCI states.

Optionally, the third-type CORESET corresponds to a CORESET with a CORESET pool index of 1 and having one TCI state.

Optionally, the fourth-type CORESET corresponds to a CORESET with a CORESET pool index of 1 and having two TCI states; or the fourth-type CORESET corresponds to a CORESET with CORESET pool indices of 0 and 1 and having two TCI states; or the fourth-type CORESET corresponds to a CORESET with a CORESET pool index of a value other than 0 and 1 and having two TCI states.

Optionally, the BFD resource of the target TRP includes a reference signal resource corresponding to a specific TCI state in the two TCI states corresponding to the second-type CORESET, and the specific TCI state corresponds to a TRP with the CORESET pool index of 0.

Optionally, the BFD resource of the target TRP includes a reference signal resource corresponding to a specific TCI state in the two TCI states corresponding to the fourth-type CORESET, and the specific TCI state corresponds to a TRP with the CORESET pool index of 1.

Optionally, the configuration information includes a TRP identifier and a reference signal resource set corresponding to the TRP identifier; the apparatus 500 for determining a BFD resource may further include a third determining module.

The third determining module is configured to determine the TRP identifier in the configuration information as the target TRP, and a reference signal resource in the reference signal resource set corresponding to the TRP identifier as the target BFD resource.

In the apparatus for determining a BFD resource according to some embodiments of the disclosure, the configuration information of the network device is determined by the terminal device, and the target TRP and the target BFD resource corresponding to the target TRP are determined according to the configuration information, so that the terminal device may detect whether the beam failure occurs in the target TRP based on the target BFD resource. Therefore, when the beam failure occurs, the terminal device may timely detect that the beam failure occurs in the target TRP based on the target BFD resource, so as to perform a beam failure recovery as soon as possible, so as to ensure the communication efficiency and communication reliability between the terminal device and the network device.

Corresponding to the method for determining a BFD resource provided in the above-mentioned embodiments of FIG. 4, the disclosure also provides an apparatus for determining a BFD resource. Since the apparatus for determining a BFD resource provided in some embodiments of the disclosure corresponds to the method for determining a BFD resource provided in some embodiments of FIG. 4, the implementation of the method for determining a BFD resource provided in some embodiments of FIG. 4 is also applicable to the apparatus for determining a BFD resource provided in some embodiments. The apparatus for determining a BFD resource is not described in detail in some embodiments of the disclosure.

FIG. 6 is a schematic block diagram of another apparatus for determining a BFD resource according to some embodiments of the disclosure.

As illustrated in FIG. 6, the apparatus 600 for determining a BFD resource may include a transmitting module 610.

The transmitting module 610 is configured to transmit configuration information to a terminal device, in which the configuration information is used to determine a target TRP and a target BFD resource corresponding to the target TRP, and the target BFD resource is used to detect whether the target TRP has a beam failure.

In the apparatus for determining a BFD resource according to some embodiments of the disclosure, the configuration information is transmitted to the terminal device by the network device, in which the configuration information is used to determine the target TRP and the target BFD resource corresponding to the target TRP, and the target BFD resource is used for detect whether the target TRP has the beam failure. Therefore, when the beam failure occurs, the terminal device may timely detect that the target TRP has the beam failure based on the target BFD resource, so as to perform a beam failure recovery as soon as possible, thereby ensuring the communication efficiency and communication reliability between the terminal device and the network device.

In order to realize the above embodiments, the disclosure also proposes a communication device.

The communication device provided in some embodiments of the disclosure includes a processor, a transceiver, a memory, and an executable program stored in the memory and capable of being executed by the processor. When the processor runs the executable program, any of the foregoing methods for determining a BFD resource in FIG. 1 to FIG. 3 is executed or any of the foregoing methods for determining a BFD resource in FIG. 4 is executed.

The communication device may be the aforementioned terminal device or network device.

The processor may include various types of storage media, which are non-transitory computer storage media that may continue to memorize and store information on the communication device after the power is turned off. Herein, the communication device includes the terminal device or the network device.

The processor may be connected to the memory through a bus or the like, for reading the executable program stored on the memory, such as at least one of FIG. 1 to FIG. 4.

In order to realize the above embodiments, the disclosure also proposes a computer storage medium.

The computer storage medium provided in some embodiments of the disclosure stores an executable program; after the executable program is executed by a processor, the method for determining a BFD resource is performed, for example, at least as illustrated in FIG. 1 to FIG. 4.

In some embodiments of the disclosure, the terminal device confirms the reference signal resource included in the BFD reference signal resource set of each TRP, and detects whether the beam failure occurs in the TRP based on the reference signal resource (referred to as the BFD resource in this disclosure).

In some embodiments of the disclosure, the terminal device receives the indication signaling from the network device, in which the indication signaling is used to indicate the reference signal resource included in the BFD reference signal resource set of each TRP.

In some embodiments of the disclosure, when the terminal device does not receive the indication signaling from the network device, in which the indication signaling is used to indicate the reference signal resource included in the BFD reference signal resource set of each TRP, the terminal device determines the reference signal resource included in the BFD reference signal resource set of each TRP according to the CORESET that the terminal device needs to monitor and the TRP corresponding to the CORESET.

In some embodiments of the disclosure, the terminal device receives the indication signaling from the network device, in which the indication signaling is used to configure at least one first CORESET of the terminal device, the first CORESET corresponds to at least one TCI state, the typical value of at least one may be 1 or 2, and one TCI state corresponds to one beam.

In some embodiments of the disclosure, the reference signal resource included in the reference signal resource set of each TRP, determined by the terminal device, do not include the reference signal corresponding to the TCI state of the first CORESET supporting the plurality of TCI states.

In some embodiments of the disclosure, the reference signal resource included in the reference signal resource set of each TRP, determined by the terminal device, include at least one reference signal among the reference signals corresponding to the TCI state of the first CORESET supporting the plurality of TCI states.

In some embodiments of the disclosure, the terminal device receives the value of the CORESETpoolindex configured by the network device for the first CORESET. Since the first CORESET actually corresponds to two TRPs, the CORESETpoolindex of the first CORESET may be 0 (corresponding to the first TRP), or 1 (corresponding to the second TRP), or 0 and 1 (corresponding to the first TRP and the second TRP), or a value other than 0 and 1, such as 2 (representing corresponding to the first TRP and the second TRP).

In some embodiments of the disclosure, the terminal device determines, according to the CORESETPoolIndex, that the TCI state corresponding to the first CORESET is included in the BFD reference signal resource set corresponding to which TRP. For example, if the CORESETPoolIndex corresponding to the first CORESET is 0, the reference signal resource of the TCI state of the first TRP corresponding to the first CORESET may be determined as the BFD resource of the first TRP, and the reference signal corresponding to the TCI state of the second TRP may not need to be determined; for another example, if the CORESETPoolIndex corresponding to the first CORESET is 1, the reference signal resource of the TCI state of the second TRP corresponding to the first CORESET may be determined as the BFD resource of the second TRP, and the reference signal corresponding to the TCI state of the first TRP may not need to be determined.

In some embodiments of the disclosure, the CORESETPoolIndex corresponding to the first CORESET is 0 and 1, or 2, which means that the CORESETPoolIndex corresponds to two TRPs, and the reference signal resource of the TCI state of the first TRP corresponding to the first CORESET is determined as the BFD resource of the first TRP, and the reference signal resource of the TCI state of the second TRP corresponding to the first CORESET is determined as the BFD resource of the second TRP.

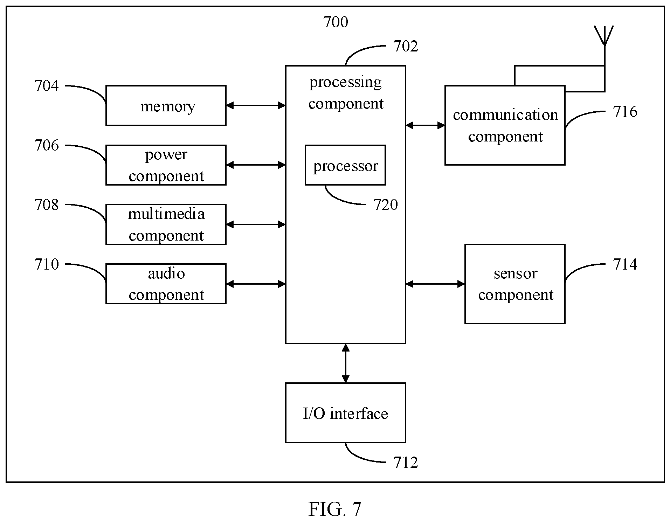

FIG. 7 is a schematic block diagram of a terminal device according to some embodiments of the disclosure. For example, the terminal device 700 may be a mobile phone, a computer, a digital broadcast terminal, a messaging device, a gaming console, a tablet, a medical device, exercise equipment, a personal digital assistant, and the like.

Referring to FIG. 7, the terminal device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the terminal device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the terminal device 700. Examples of such data include instructions for any applications or methods operated on the terminal device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the terminal device 700. The power component 706 may include a power management system, one or more power sources, and any other components associated with the generation, management, and distribution of power in the terminal device 700.

The multimedia component 708 includes a screen providing an output interface between the terminal device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the terminal device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the terminal device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the terminal device 700. For instance, the sensor component 714 may detect an open/closed status of the terminal device 700, relative positioning of components, e.g., the display and the keypad, of the terminal device 700, a change in position of the terminal device 700 or a component of the terminal device 700, a presence or absence of user contact with the terminal device 700, an orientation or an acceleration/deceleration of the terminal device 700, and a change in temperature of the terminal device 700. The sensor component 714 may include a proximity sensor configured to detect the presence of nearby objects without any physical contact. The sensor component 714 may also include a light sensor, such as a CMOS or CCD image sensor, for use in imaging disclosures. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the terminal device 700 and other devices. The terminal device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the terminal device 700 may be implemented with one or more disclosure specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 704, executable by the processor 720 in the terminal device 700, for performing the above-described methods. For example, the non-transitory computer-readable storage medium may be a ROM, a RAM, a CD-ROM, a magnetic tape, a floppy disc, an optical data storage device, and the like.

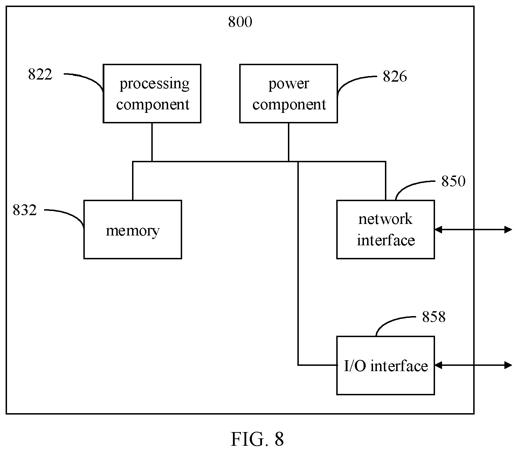

As illustrated in FIG. 8, it is a schematic block diagram of a network device according to some embodiments of the disclosure. Referring to FIG. 8, the network device 800 includes a processing component 822, which further includes at least one processor, and a memory resource, represented by a memory 832, for storing instructions executable by the processing component 822, such as an application program. The application program stored in the memory 832 may include one or more modules, in which each corresponding to a set of instructions. Furthermore, the processing component 922 is configured to execute instructions to perform any of the aforementioned methods applicable to the base station, e.g., the methods illustrated in FIG. 4.

The network device 800 may also include a power component 826 configured to perform power management of the network device 800, a wired or wireless network interface 850 configured to connect the network device 800 to a network, and an I/O interface 858. The network device 800 may operate based on an operating system stored in the memory 832, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed herein. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a beam failure detection (BFD) resource, comprising:
determining configuration information transmitted from a network device; and
determining a target transmission reception point (TRP) and a target BFD resource corresponding to the target TRP according to the configuration information, wherein whether a beam failure occurs in the target TRP is detected based on the target BFD resource.

2. The method of claim 1, wherein the configuration information comprises index information, the index information comprises a control resource set (CORESET) pool index corresponding to a CORESET or a TRP identifier corresponding to the CORESET, and the CORESET corresponds to at least one transmission configuration indication (TCI) state.

3. The method of claim 2, wherein the configuration information comprises one or a plurality of TCI states corresponding to the CORESET and the plurality of TCI states are in one-to-one correspondence with a plurality of TRPs.

4. The method of claim 3, wherein determining the target TRP and the target BFD resource corresponding to the target TRP according to the configuration information comprises:
selecting the target TRP from the plurality of TRPs according to the index information; and
determining a BFD resource corresponding to the target TRP as the target BFD resource.

5. The method of claim 4, wherein selecting the target TRP from the plurality of TRPs according to the index information comprises:
selecting the target TRP from the plurality of TRPs according to a value of the index information.

6. The method of claim 4, wherein selecting the target TRP from the plurality of TRPs according to the index information comprises:
determining a correspondence between index information and TRPs; and
selecting the target TRP from the plurality of TRPs according to the correspondence.

7. The method of claim 4, wherein,
the target TRP is a TRP corresponding to a CORESET pool index of 0, and the BFD resource of the target TRP comprises a reference signal resource indicated by a TCI state corresponding to a first-type CORESET and/or a second-type CORESET; or
the target TRP is a TRP corresponding to a CORESET pool index of 1, and the BFD resource of the target TRP comprises a reference signal resource indicated by a TCI state corresponding to a third-type CORESET and/or a fourth-type CORESET.

8. The method of claim 7, wherein,
the first-type CORESET corresponds to a CORESET with a CORESET pool index of 0 and having one TCI state.

9. The method of claim 7, wherein,
the second-type CORESET corresponds to a CORESET with a CORESET pool index of 0 and having two TCI states; or
the second-type CORESET corresponds to a CORESET with CORESET pool indices of 0 and 1 and having two TCI states; or
the second-type CORESET corresponds to a CORESET with a CORESET pool index of a value other than 0 and 1 and having two TCI states.

10. The method of claim 7, wherein,
the third-type CORESET corresponds to a CORESET with a CORESET pool index of 1 and having one TCI state.

11. The method of claim 7, wherein,
the fourth-type CORESET corresponds to a CORESET with a CORESET pool index of 1 and having two TCI states; or
the fourth-type CORESET corresponds to a CORESET with CORESET pool indices of 0 and 1 and having two TCI states; or
the fourth-type CORESET corresponds to a CORESET with a CORESET pool index of a value other than 0 and 1 and having two TCI states.

12. The method of claim 9, wherein,
the BFD resource of the target TRP comprises a reference signal resource corresponding to a specific TCI state in the two TCI states corresponding to the second-type CORESET, and the specific TCI state corresponds to a TRP with the CORESET pool index of 0.

13. The method of claim 11, wherein,
the BFD resource of the target TRP comprises a reference signal resource corresponding to a specific TCI state in the two TCI states corresponding to the fourth-type CORESET, and the specific TCI state corresponds to a TRP with the CORESET pool index of 1.

14. The method of claim 1, further comprising:
the configuration information comprising a TRP identifier and a reference signal resource set corresponding to the TRP identifier;
determining the TRP identifier in the configuration information as the target TRP, and a reference signal resource in the reference signal resource set corresponding to the TRP identifier as the target BFD resource.

15. A method for determining a BFD resource, comprises:
transmitting configuration information to a terminal device, wherein the configuration information is used to determine a target TRP and a target BFD resource corresponding to the target TRP, and the target BFD resource is used to detect whether the target TRP has a beam failure.

16. An apparatus for determining a BFD resource, comprising:
a first determining module, configured to determine configuration information transmitted from a network device; and
a second determining module, configured to determine, according to the configuration information, a target TRP and a target BFD resource corresponding to the target TRP, wherein whether a beam failure occurs in the target TRP is detected based on the target BFD resource.

17. An apparatus for determining a BFD resource, comprising:
a transmitting module, configured to transmit configuration information to a terminal device, wherein the configuration information is used to determine a target TRP and a target BFD resource corresponding to the target TRP, and the target BFD resource is used to detect whether the target TRP has a beam failure.

18. A communication device, comprising: a transceiver; a memory; and a processor, respectively connected to the transceiver and the memory and configured to, by executing computer-executable instructions on the memory, control wireless signal transmission and reception of the transceiver and perform the method of any one of claims 1 to 14 or 15.

19. A computer storage medium, wherein the computer storage medium stores computer-executable instructions; and when the computer-executable instructions are executed by a processor, the method of any one of claims 1 to 14 or 15 is performed.
